# EUROPÄISCHE PATENTANMELDUNG

(11) **EP 4 435 690 A2**
(43) Veröffentlichungstag der Anmeldung: **25.09.2024**
(21) Anmeldenummer: 24179871.9
(22) Anmeldetag: 27.09.2017
(51) Int. Cl.: G06Q 10/06

(54) **BEARBEITUNGSVERFAHREN, DATENBANKSERVER, SYSTEM UND VERFAHREN ZUM TEILEN VON DATEN FÜR BEARBEITUNGS- VORRICHTUNGEN MITTELS DATENFERNÜBERTRAGUNG**

(30) Priorität: 06.10.2016 DE 102016219371
(62) Teilanmeldung aus: 17783774.7
(71) Anmelder: HOMAG GmbH, 72296 Schopfloch (DE)
(72) Erfinder: HOMEIER, Achim, 72285 Pfalzgrafenweiler (DE)
(74) Vertreter: Hoffmann Eitle

(57) **Zusammenfassung**

System (1) zum Teilen von vorrichtungsbezogenen Daten mittels Datenfernübertragung, insbesondere von bearbeitungsspezifischen Parametern, von Bearbeitungsvorrichtungen (30, 35), insbesondere Holzbearbeitungsvorrichtungen, zur Bearbeitung von bevorzugt zumindest abschnittsweise aus Holz, Holzwerkstoff, Kunststoff und/oder Glas bestehenden Werkstücken, umfassend: einen Hauptrechner (15), zur Erzeugung und Bereitstellung einer Datenbank (10), in der die vorrichtungsbezogenen Daten verwaltbar sind, einen ersten Arbeitsrechner (20) einer ersten Bearbeitungsvorrichtung (30), der mit dem Hauptrechner (15) über eine Datenkommunikationsverbindung verbindbar ist, und einen zweiten Arbeitsrechner (25) einer zweiten Bearbeitungsvorrichtung (35), der mit dem Hauptrechner über eine Datenkommunikationsverbindung verbindbar ist, wobei durch mindestens einen der beiden Arbeitsrechner (20, 25) vorrichtungsbezogene Daten in der Datenbank (10) des Hauptrechners (15) speicherbar sind und dadurch für den anderen der beiden Arbeitsrechner (20, 25) verfügbar gemacht werden können.

## Beschreibung

### Gebiet der Erfindung

Die Erfindung betrifft eine Bearbeitungsvorrichtung, einen Datenbankserver, ein System und ein Verfahren zum Teilen von Daten von Bearbeitungsvorrichtungen, insbesondere Holzbearbeitungsvorrichtungen, mittels Datenfernübertragung.

### Stand der Technik

Im Bereich der Bearbeitungsvorrichtungen, insbesondere bei Holzbearbeitungsvorrichtungen besteht aufgrund der großen Varianz an zu bearbeitenden und verarbeitenden Werkstoffen, insbesondere inhomogener Massivhölzer und Holzwerkstoffen, die Notwendigkeit Tests mit unterschiedlichen Werkzeugen, Verfahrensparametern, wie z.B. verschiedenen Vorschüben, Drehzahlen, Temperaturen, Materialmengen (Lackmenge) und Hilfsstoffen, wie z.B. Leim) durchzuführen, um gute und insbesondere reproduzierbare Arbeitsergebnisse erzielen zu können. Oftmals wird dadurch viel Zeit zur Beschaffung von geeigneten Werkzeugen, Materialien und dergleichen verloren. Ferner besteht bei Kleinserien das Problem, dass die gesammelten Erfahrungen oft nur einem oder wenigen Bedienern einer Bearbeitungsvorrichtung innerhalb eines Betriebs zur Verfügung stehen. Des Weiteren werden die Erfahrungswerte in der Regel nicht systematisch erfasst und anderen Nutzern zugänglich gemacht. Weiterhin findet auch keine firmenübergreifende systematische Erfassung und Auswertung derartiger Erfahrungswerte statt.

Oftmals kann nur auf Anhaltspunkte in der Fachliteratur zurückgegriffen werden, welche jedoch nur spärlich vorhanden sind, oft veraltet sind, und in vielen Fällen mit der rasanten Entwicklung neuer Materialen nicht Schritt halten können. Damit stehen dem einzelnen Bediener nur seine eigenen Erfahrungswerte und in geringem Umfang betriebsinternes Wissen oder Wissen von Zulieferfirmen, die das neuentwickelte Material bereitstellen, zur Verfügung. Entsprechend besteht ein großer Bedarf eine Möglichkeit zu schaffen, vorrichtungsbezogene Daten, insbesondere bearbeitungsspezifische Parameter firmenübergreifend verfügbar zu machen und auszutauschen, um die Bearbeitungsqualität zu verbessern, Einstellprozesse zu vereinfachen und Bearbeitungskosten, insbesondere Produktanlaufkosten zu reduzieren.

Andererseits werden in jüngster Zeit, insbesondere durch Maschinenhersteller, sporadisch und willkürlich Maschinendaten erfasst. In den meisten Fällen dient dies für Wartungszwecke der Maschinen und nur zum geringen Teil zur internen Weiterentwicklung der Maschinen. In solchen Fällen werden oftmals lediglich die Beanspruchung der Maschine und Bearbeitungsvorgänge, die vorrangig durchgeführt werden, erfasst, um basierend auf den ermittelten Daten die eigenen Maschinen weiterzuentwickeln. Bei der Weiterentwicklung von neuen Bearbeitungsmaschinen wird daher oftmals nur von bekannten Standardanwendungen ausgegangen, wobei wichtige Trends oder Veränderungen des Nutzungsverhalten der Anwender nicht oder zu spät erkannt werden. In dem meisten Fällen werden derartige Informationen nicht systematisch übermittelt und gesammelt, sondern oft persönlich durch Wartungspersonal oder Verkaufspersonal mit dem Kunden ausgetauscht.

### Darstellung der Erfindung

Aufgabe vorliegender Erfindung ist es daher, ein System und ein Verfahren bereitzustellen, anhand denen vorrichtungsbezogene Daten von Bearbeitungsvorrichtungen, insbesondere von Holzbearbeitungsvorrichtungen, auf unkomplizierte und sichere Weise zwischen mindestens zwei Bedienern von Bearbeitungsvorrichtungen anhand einer Datenfernübertragung geteilt werden können.

Die Aufgabe wird gelöst durch eine Bearbeitungsvorrichtung nach Anspruch 1, einen Datenbankserver nach Anspruch 7, ein System nach Anspruch 8 sowie ein Verfahren nach Anspruch 20. Bevorzugte Weiterbildungen der Erfindung sind in den abhängigen Ansprüchen angegeben.

Einer der Kerngedanken der vorliegenden Erfindung ist es, anhand eines Hauptrechners eine Datenbank zu erzeugen und mittels Datenfernübertragung (cloudbasiert) bereitzustellen, sodass mindestens zwei Arbeitsrechner zweier unterschiedlicher Bearbeitungsvorrichtungen auf diese zugreifen können, wobei zumindest einer der beiden Arbeitsrechner vorrichtungsbezogene Daten in der Datenbank des Hauptrechners speichert, womit diese für den anderen der beiden Arbeitsrechner verfügbar werden.

Mittels dem vorgeschlagenen System kann somit ein Bediener bzw. ein Arbeitsrechner einer Bearbeitungsvorrichtung auf einfache und sichere Weise stets auf vorrichtungsbezogene Daten einer anderen Bearbeitungsvorrichtung, die in einer Datenbank abgespeichert sind und auf diese Weise verfügbar gemacht sind, zugreifen.

In vorliegender Erfindung ist unter dem Begriff "Bearbeitungsvorrichtung" neben der klassischen formgebenden Bearbeitungsvorrichtung, wie z.B. eine Trennbearbeitungsvorrichtung, eine Schneidvorrichtung, und dergleichen, auch eine Vorrichtung zu verstehen, bei der auf ein Werkstück z.B. Stoffe aufgebracht werden, wie z.B. eine Lackiervorrichtung, Beschichtungsvorrichtung, und dergleichen.

Gemäß der vorliegenden Erfindung weist eine Bearbeitungsvorrichtung, Holzbearbeitungsvorrichtung, zur Bearbeitung von bevorzugt zumindest abschnittsweise aus Holz, Holzwerkstoff, Kunststoff und/oder Glas bestehenden Werkstücken, auf: mindestens eine Funktionseinheit zur Ausführung einer Funktion in der Bearbeitungsvorrichtung, und eine Datenkommunikationsverbindung, die dazu konfiguriert ist, vorrichtungsbezogene Daten von einer externen Datenbank zu empfangen, um diese für einen Bediener der Bearbeitungsvorrichtung verfügbar zu machen und/oder diese der mindestens einen Funktionseinheit bereitzustellen, wobei eine Ansteuerung oder Auswahl der mindestens einen Funktionseinheit auf den empfangenen vorrichtungsbezogenen Daten beruht.

Auf diese Weise wird eine Bearbeitungsvorrichtung zur Verfügung gestellt, die in der Lage ist, einem Bediener der Bearbeitungsvorrichtung und/oder einer Funktionseinheit dieser vorrichtungsbezogene Daten, die sie von einer externen Datenbank empfängt, verfügbar zu machen, wodurch die Bearbeitungsvorrichtung schneller eingerichtet werden kann. Hierbei ist unter Einrichten zu verstehen, dass an der Bearbeitungsvorrichtung eine unbekannte, bisher nicht durchgeführte Bearbeitung vorgenommen wird, und somit keine Bearbeitungsparameter (Einstellparameter) bekannt sind. Dies kann zum Beispiel der Fall sein, wenn ein neuer Werkstoff, ein neues Werkzeug oder ein neues Verarbeitungsmaterial wie Lack, Leim, Klebstoff usw. bearbeitet, verarbeitet bzw. verwendet wird.

Bevorzugt handelt es sich bei der mindestens einen Funktionseinheit um einen Prozessor, wobei der Prozessor die vorrichtungsbezogenen Daten zur Steuerung der Bearbeitungsvorrichtung verwendet.

Ferner kann die mindestens eine Funktionseinheit ein Werkzeug oder ein Bearbeitungsaggregat wie z.B. ein Sprühkopf, ein Beschichtungsaggregat, ein Heißluftaggregat usw. sein, wobei das Werkzeug oder das Bearbeitungsaggregat basierend auf den vorrichtungsbezogenen Daten ausgewählt bzw. angesteuert wird.

In einer weiteren Ausführungsform ist die Bearbeitungsvorrichtung konfiguriert, die vorrichtungsbezogenen Daten nach Werkzeugtyp, Werkzeugnummer, Werkstückparameter, Vorrichtungstyp, und/oder Hersteller bei dem externen Datenbankserver abzufragen.

Bevorzugt ist die Datenkommunikationsverbindung ferner konfiguriert, an der Bearbeitungsvorrichtung gesammelte vorrichtungsbezogene Daten an die externe Datenbank zu übertragen.

Auf diese Weise ist es möglich betriebsübergreifend oder sogar firmenübergreifend vorrichtungsbezogene Daten zu sammeln, und diese somit unter verschiedenen Bearbeitungsvorrichtungen auszutauschen. Damit kann eine Bearbeitungsvorrichtung bzw. ein Bediener einer Bearbeitungsvorrichtung auf entsprechend mehr vorrichtungsspezifische Daten zurückgreifen, wodurch die Aussichten erheblich verbessert werden, notwendige Daten in der externen Datenbank zu finden.

Des Weiteren kann die Bearbeitungsvorrichtung mindestens eine Werkstückerfassungseinrichtung aufweisen, anhand der bevorzugt zerstörungsfrei Werkstückparameter wie Elastizitätsmodul, Dichte, Dicke, Schichtdicke, usw. erfasst werden. Anhand der erfassten Werkstückparameter kann zumindest eine Vorauswahl der von der externen Datenbank zur Verfügung gestellten vorrichtungsbezogenen Daten erfolgen. Hierbei kann die zerstörungsfreie Überprüfung bzw. Erfassung anhand von Ultraschall, Röntgenstrahlung, Akustischer Resonanzanalyse, visueller Inspektion und dergleichen erfolgen. Erfasst zum Beispiel die Werkstückerfassungseinrichtung, dass es sich bei dem zu bearbeitenden Werkstück um ein sehr inhomogenes Leichtholz handelt, kann die externe Datenbank bereits entsprechend durchsucht bzw. gefiltert werden. Mit anderen Worten, dem Bediener werden beispielsweise lediglich Parametersätze für Leichtholz, insbesondere inhomogenes Leichtholz, angezeigt.

Gemäß der vorliegenden Erfindung weist das System zum Teilen von vorrichtungsbezogenen Daten mittels Datenfernübertragung, insbesondere von bearbeitungsspezifischen Parametern, von Bearbeitungsvorrichtungen, insbesondere Holzbearbeitungsvorrichtungen, zur Bearbeitung von bevorzugt zumindest abschnittsweise aus Holt, Holzwerkstoff, Kunststoff und/oder Glas bestehenden Werkstücken auf: einen Hauptrechner, der auch als "Host" bezeichnet wird und dazu dient, eine Datenbank zu erzeugen und bereitzustellen, um die vorrichtungsbezogenen Daten verwalten zu können, einen ersten Arbeitsrechner, der auch als "Client I" bezeichnet wird und der über eine Datenkommunikationsverbindung mit dem Hauptrechner verbunden werden kann, und einen zweiten Arbeitsrechner, der auch als "Client II" bezeichnet wird und der ebenfalls über eine Datenkommunikationsverbindung mit dem Hauptrechner verbunden werden kann, wobei durch mindesten einen der beiden Arbeitsrechner vorrichtungsbezogene Daten in der Datenbank des Hauptrechners gespeichert werden können und dadurch für den anderen der beiden Arbeitsrechner verfügbar gemacht werden können. Es versteht sich von selbst, dass an den Hauptrechner über jeweilige Datenkommunikationsverbindungen eine beliebig große Anzahl von Arbeitsrechnern angebunden werden kann, womit die Datenbank beliebig umfangreich werden kann.

Auf diese Weise wird ein System zum Teilen von vorrichtungsbezogenen Daten mittels Datenfernübertragung bereitgestellt, mit dem eine beliebig große Anzahl von Bedienern bzw. Arbeitsrechnern von unterschiedlichen bzw. unabhängigen Bearbeitungsvorrichtungen, insbesondere von Holzbearbeitungsvorrichtungen, vorrichtungsbezogene Daten, insbesondere bearbeitungsspezifische Parameter teilen bzw. austauschen können. Hierbei wächst die Menge an verfügbaren vorrichtungsbezogenen Daten, die in der Datenbank abgespeichert sind, umso schneller, desto mehr und je häufiger einzelne Bediener bzw. Arbeitsrechner ihre Daten in der Datenbank abspeichern. Auf entsprechend mehr vorrichtungsspezifische Daten hat der einzelne Bediener bzw. Arbeitsrechner durch das System Zugriff.

Bevorzugt handelt es sich bei dem Hauptrechner des Systems zum Teilen von vorrichtungsbezogenen Daten mittels Datenfernübertragung um einen Webserver eines Maschinenherstellers oder Herstellers von Maschinenkomponenten, welcher eine World-Wide-Web-Adresse hat und eine Internet-Verbindbarkeit schafft, anhand der die vorrichtungsspezifischen Daten zwischen kundenseitigen Arbeitsrechnern und dem Webserver übermittelt, geteilt bzw. ausgetauscht werden können. Der Webserver stellt sozusagen die Datenbank in einer Cloud zur Verfügung, auf die die einzelnen Arbeitsrechner zugreifen können und ihre Daten cloudbasiert teilen bzw. austauschen können.

Somit ist es möglich, dass z.B. ein Maschinenhersteller einen Webserver bereitstellt, auf welchem die Datenbank aufgesetzt, verwaltet und gewartet wird, und die jeweiligen Kunden des Maschinenherstellers, die bestimmte Typen von Bearbeitungsvorrichtungen bezogen haben, auf diese Datenbank zugreifen können und in dieser ihre jeweiligen vorrichtungsbezogenen Daten, insbesondere bearbeitungsspezifischen Parameter, speichern können. Auf diese Weise wird es ermöglicht, dass vorrichtungsbezogene Daten nicht nur innerhalb eines Betriebs (eines Kunden) ausgetauscht werden, oder einseitig von einem Kunden an einen Maschinenhersteller für Wartungszwecken oder Entwicklungszwecken weitergeleitet werden können, sondern vielmehr, die vorrichtungsbezogenen Daten unter sämtlichen Kunden bzw. Bedienern eines Maschinenherstellers oder auch eines Kompetenzclusters gesammelt und ausgetauscht werden können. Hiermit wird die Menge an verfügbaren Daten drastisch gesteigert.

Gemäß einer bevorzugten Ausführungsform umfassen die gespeicherten, verfügbar gemachten und ausgetauschten bearbeitungsspezifischen Parameter mindestens einen der nachfolgenden Parameter: Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Materialmenge, Hilfsstoffe und dergleichen, Oberflächengüte, Qualität, Werkzeugstandzeit.

Hiermit können auf einfache Weise Bediener von Bearbeitungsvorrichtungen, bevorzugt vom gleichen Typen, bearbeitungsspezifische Parameter untereinander austauschen. Damit kann z.B. ein Bediener, der ein für ihn neues Material mit einem bestimmten Werkzeug an einer bestimmten Bearbeitungsmaschine bearbeiten möchte, in der Datenbank recherchieren, ob bereits vorher von einem anderen Bediener ein gleiches oder ähnliches Material bearbeitet wurde. Falls ja, kann der Bediener Anhaltspunkte hinsichtlich der Bearbeitungsparameter wie Vorschub, Drehzahl, Schnittgeschwindigkeit und dergleichen erhalten. Was es dem Bediener vereinfacht schneller zu einem gewünschten Ergebnis zu gelangen.

Entsprechend handelt es sich bei den in der Datenbank gespeicherten bearbeitungsspezifischen Parametern bevorzugt um Parameter, bei denen ein optimales Bearbeitungsergebnis erzielbar ist. Unter einem optimalen Bearbeitungsergebnis ist zu verstehen, dass auch unter leicht schwankenden Materialeigenschaften eine gewünschte Produktqualität reproduzierbar erzielbar ist. Bevorzugt anhand von optimierten Bearbeitungsparametern (wie z.B. maximale Schnittgeschwindigkeit, minimaler Stoffeinsatz, usw.).

Diesbezüglich ist es auch denkbar, die Datenbank mit einem Bewertungssystem auszustatten, das es den einzelnen Bedienern bzw. Arbeitsrechnern ermöglicht, die abgespeicherten Parameter zu beurteilen. D.h., zu beurteilen, wie zufrieden der Bediener mit dem erzielten Ergebnis basierend auf den abgespeicherten bearbeitungsspezifischen Parametern ist. Dies erleichtert es anderen Bedienern, die auf der Suche nach geeigneten Parametern sind, schnell zu erkennen, welche gespeicherten Daten gute Ergebnisse liefern und welche eher nicht zufriedenstellende Resultate liefern.

Gemäß einer bevorzugten Ausführungsform weisen die jeweiligen Arbeitsrechner gegenüber dem Hauptrechner ein eindeutiges Identifizierungsmittel, insbesondere einen Identifizierungscode auf, über das der Hauptrechner vorrichtungsspezifische Daten, die dieser von den jeweiligen Arbeitsrechner empfangen hat, diesen eindeutig zuordnet kann.

Bevorzugt werden die von einem der Arbeitsrechner in der Datenbank gespeicherten vorrichtungsbezogenen Daten anonym für den anderen der beiden Arbeitsrechner verfügbar gemacht. Es besteht auch die Möglichkeit, die Daten vollständig anonym zu verwalten, um etwaige Risiken hinsichtlich Datendiebstahls auszuschließen.

Des Weiteren können die in der Datenbank gespeicherten vorrichtungsbezogenen Daten nicht direkt für andere Bediener (Anwender) bzw. Arbeitsrechner verfügbar gemacht werden, sondern lediglich in Form von Durchschnittswerten bzw. interpolierten Werten zur Verfügung gestellt werden. Dies bietet den Vorteil, dass die Datenbank zwischen einzelnen Parameterwerten aufgefüllt werden kann, und somit dem einzelnen Bediener mehr Datensätze angeboten werden können. Wenn also vorrichtungsspezifische Daten hinsichtlich z.B. einem bestimmter Werkstoff mit einem bestimmten Fräser vom Durchmesser von 10, 15 und 20 mm vorhanden sind, kann die Datenbank automatisch die Werte für Durchmesser von 10 bis 20 mm ermitteln und die fehlenden Werte für Durchmesser von 11, 12, 13, 14, 16, 17, 18 und 19 mm ergänzen.

Ferner besteht die Möglichkeit, dass die jeweiligen Arbeitsrechner die vorrichtungsspezifischen Daten automatisch und/oder auf Anweisung seitens eines Bedieners bzw. eines Anwenders der entsprechenden Bearbeitungsvorrichtung an den Hauptrechner übermitteln.

Falls die Daten automatisch von dem Arbeitsrechner ausgelesen und an den Hauptrechner übermittelt werden, bietet dies den Vorteil, dass eine große Menge an vorrichtungsbezogenen Daten an den Hauptrechner übermittelt wird, womit dieser schnell eine große Datensammlung aufbauen kann und entsprechend die Datenbank schnell mit einer Fülle an Daten befüllen kann. Dies verlangt jedoch seitens des Hauptrechners ein großes Datenvolumen zu verarbeiten und auszuwerten. Insbesondere ist es notwendig, die zur Verfügung stehenden Daten hinsichtlich ihrer Integrität auszuwerten, um den einzelnen Bedienern bzw. Arbeitsrechnern zuverlässige Daten zur Verfügung zu stellen. Entsprechend bietet die Variante, in der nur Daten übertragen werden, wenn es der Bediener ausdrücklich wünscht, den Vorteil, dass grundsätzlich nur Daten übertragen werden wenn ein gutes Ergebnis erzielt werden konnte, was die Qualität der vorhandenen Daten steigert. Andererseits besteht hier die Gefahr, dass nur langsam Daten gesammelt werden, da der Bediener für die Datenübermittlung selbst zuständig ist und gegebenenfalls oftmals davon absieht.

Gemäß einer weiteren Ausführungsform vorliegender Erfindung kann daher der Arbeitsrechner basierend auf Vorrichtungsmesswerten, wie z.B. Antriebsbelastung, Vibrationen am Werkzeug und/oder an der Vorrichtung, Vorschubgeschwindigkeit und dergleichen, die seitens der Bearbeitungsvorrichtung erfasst werden, ermitteln, ob es sich bei der vorgenommenen Werkstückbearbeitung um eine stabile Bearbeitung (d.h., bei der ein optimales Bearbeitungsergebnis erzielbar ist) handelt oder nicht, und entsprechend die erfassten bearbeitungsspezifischen Parameter an den Hauptrechner übermittelt oder nicht.

Auf diese Weise ist es möglich, die Übermittlung der vorrichtungsbezogenen Daten, insbesondere der bearbeitungsspezifischen Daten zu automatisieren, und dennoch den Hauptrechner nicht mit Daten zu überfluten, die zu keinen guten Ergebnissen führen. Hier besteht auch die Möglichkeit, dass der Arbeitsrechner anhand der erfassten Vorrichtungsmesswerte, wie z.B. geringen Vibrationen, ermittelt, ob es sich bei dem zuletzt durchgeführten Bearbeitungsvorgang um eine Bearbeitung mit gutem Ergebnis handelt, und wenn ja, dem Bediener auffordert, die Daten zu übermitteln. Damit kann der zusätzliche Aufwand für den Bediener minimiert werden, aber trotzdem sichergestellt werden, dass möglichst viele Daten gesammelt werden.

Bevorzugt erfolgt hier ein Abgleich mit der Datenbank des Hauptrechners. D.h., wenn der Arbeitsrechner ermittelt, dass es sich bei dem zuletzt durchgeführten Bearbeitungsvorgang um eine Bearbeitung gehandelt hat, die zu einem guten Ergebnis geführt hat, der Arbeitsrechner in der Datenbank recherchiert, ob es für diese Parameterpaarung bereits einen Datensatz gibt und nur dann, wenn noch kein Datensatz vorhanden ist, den Bediener auffordert die Daten an den Hauptrechner zu übermitteln. Hiermit kann der Aufwand für den Bediener der Bearbeitungsvorrichtung weiter reduziert werden.

Gemäß einer weiteren Ausführungsform der vorliegenden Erfindung kann ein Anwender, der ein Bediener einer Bearbeitungsvorrichtung ist, oder ein Arbeitsrechner in der seitens des Hauptrechners bereitgestellten Datenbank, in den folgenden Kategorien nach bearbeitungsspezifischen Parametern suchen: Werkzeugtyp, Werkzeugnummer, Produktdaten wie z.B. Material, Abmessungen des Werkstücks, Festigkeit, Vorrichtungstyp, Hersteller und dergleichen. Damit ist es möglich anhand von bekannten gezielt zu suchen und schnellstmöglich die benötigten Daten zu finden.

Ferner besteht die Möglichkeit, es einem Bediener einer der Bearbeitungsvorrichtungen zu ermöglichen, nach dem Entnehmen von bearbeitungsspezifischen Parametern aus der Datenbank, die von einem anderen Bediener in der Datenbank abgespeichert und dadurch freigegeben wurden, diese nach erfolgreicher Verwendung zu beurteilen. D.h., hat ein Bediener einen Datensatz aus der Datenbank entnommen und diesen für seine eigene Bearbeitung eines Werkstücks verwendet und konnte dadurch ein gutes bzw. ein schlechtes Ergebnis erzielen, so kann er diese Erfahrungswerte in der Datenbank mit anderen Bedienern teilen. Was die Integrität einzelner Datensätze in der Datenbank verbessert, und es somit anderen Bedienern erleichtert, vertrauenswürdige Datensätze zu finden.

Ebenfalls kann durch das System einem Bediener die Möglichkeit gegeben werden, seine bearbeitungsspezifischen Parameter (Datensatz) mit einem anderen Datensatz der bereits durch einen anderen Bediener in der Datenbank abgespeichert wurde zu verknüpfen. Dadurch wird die Gelegenheit gegeben, Alternativvorschläge durch andere Bediener in der Datenbank abzuspeichern und kenntlich zu machen.

Gemäß einer bevorzugten Ausführungsform der vorliegenden Erfindung erfolgt eine automatische Übermittlung von vorrichtungsbezogenen Daten, insbesondere von bearbeitungsspezifischen Parametern, nur dann an den Hauptrechner, wenn Vibrationswerte an der Bearbeitungsvorrichtung unterhalb eines voreingestellten Grenzwerts liegen. Da in der Regel hohe Vibrationswerte an der Bearbeitungsvorrichtung von einer instabilen Bearbeitung stammen, kann mit hoher Wahrscheinlichkeit davon ausgegangen werden, dass die bearbeitungsspezifischen Werte zu keinem optimalen Ergebnis führen und somit es sich wahrscheinlich um einen Testlauf handelt, sodass die Werte nicht übermittelt werden sollten. Auf diese Weise ist es möglich zu verhindern, dass unnötige bzw. schlechte Daten an den Hauptrechner übermittelt werden.

Des Weiteren betrifft die vorliegende Erfindung ein Verfahren zum Teilen von vorrichtungsbezogenen Daten mittels Datenfernübertragung, insbesondere von bearbeitungsspezifischen Parametern, von Bearbeitungsvorrichtungen, insbesondere Holzbearbeitungsvorrichtungen, zur Bearbeitung von bevorzugt zumindest abschnittsweise aus Holz, Holzwerkstoff, Kunststoff und/oder Glas bestehenden Werkstücken, insbesondere mittels des oben beschriebenen Systems, wobei das Verfahren umfasst: Erzeugen einer Datenbank, in der die vorrichtungsbezogenen Daten verwaltbar sind, Speichern von vorrichtungsbezogenen Daten einer ersten Bearbeitungsvorrichtung in der Datenbank, und Verfügbarmachen der seitens der ersten Bearbeitungsvorrichtung in der Datenbank gespeicherten vorrichtungsbezogenen Daten für zumindest eine weitere Bearbeitungsvorrichtung.

### Kurze Beschreibung der Zeichnungen

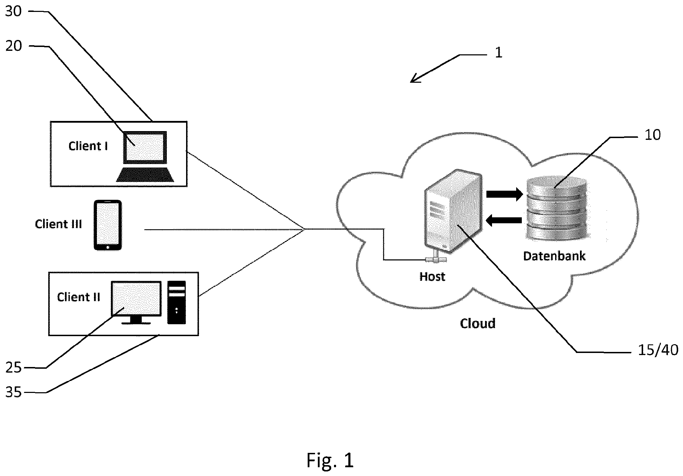

- Figur 1: zeigt schematisch den Aufbau eines Systems zum Teilen von vorrichtungsbezogenen Daten mittels Datenfernübertragung gemäß einer Ausführungsform der vorliegenden Erfindung.

### Detaillierte Beschreibung bevorzugter Ausführungsformen

Nachfolgend werden unter Bezugnahme auf die beigefügte Figur bevorzugte Ausführungsformen der vorliegenden Erfindung beschrieben. Weitere in diesem Zusammenhang genannte Varianten und Modifikationen einzelner Merkmale können jeweils miteinander kombiniert werden, um neue Ausführungsformen auszubilden.

Fig. 1 zeigt schematisch den Aufbau eines Systems 1 zum Teilen bzw. Austauschen von vorrichtungsbezogenen Daten mittels Datenfernübertragung gemäß einer Ausführungsform der vorliegenden Erfindung. Wie der Fig. entnommen werden kann, weist gemäß einer Ausführungsform der vorliegenden Erfindung das System 1 einen Hauptrechner 15 der auch "Host" genannt wird und mindestens zwei Arbeitsrechner 20, 25, die auch "Client" genannt werden, auf. Im dargestellten Ausführungsbeispiel handelt es sich um zwei Arbeitsrechner 20, 25, zweier unterschiedlicher Bearbeitungsvorrichtungen 30, 35, und um ein Tablet (Client III). Der Hauptrechner 15 stellt eine Datenbank 10 zur Verfügung, in der die vorrichtungsbezogenen Daten der einzelnen Bearbeitungsvorrichtungen 30, 35 gespeichert und verwaltet werden können. Um die vorrichtungsbezogenen Daten in der Datenbank speichern zu können, sind die beiden Arbeitsrechner 20, 25 mit dem Hauptrechner 15 anhand von Datenkommunikationsverbindungen verbunden, wobei der Datenaustausch bevorzugt verschlüsselt erfolgt. Anhand des Hauptrechners 15 wird somit eine "Cloud" realisiert, auf die die einzelnen "Clients" über eine Datenfernübertragung (DFÜ) zugreifen können und damit cloudbasiert ihre vorrichtungsbezogenen Daten teilen bzw. austauschen können. Möchte nun ein Bediener bzw. ein Arbeitsrechner einer der beiden Bearbeitungsvorrichtungen 30, 35 vorrichtungsbezogene Daten in der Datenbank 10 speichern, werden die gewünschten Daten über die Datenkommunikationsverbindung an den Hauptrechner 15 ("Cloud") übermittelt, dieser empfängt die übermittelten Daten, verifiziert diese und falls notwendig bereitet diese auf, sodass diese in der Datenbank 10 gespeichert werden können. Anschließend speichert der Hauptrechner 15 die Daten in der Datenbank 10 und gibt die gespeicherten Daten frei. Dadurch wird es ermöglicht, dass z.B. der Arbeitsrechner 20 der Bearbeitungsvorrichtung 30 vorrichtungsspezifische Daten in der Datenbank 15 speichert und diese somit für den Bediener bzw. den Arbeitsrechner 25 der Bearbeitungsvorrichtung 35 zugänglich werden. Diesbezüglich ist es auch möglich, andere Vorrichtungen wie Desktop-PCs, Mobilgeräte, Laptops, Tablets, Smartphones, usw. zu nutzen, um die gespeicherten Daten der Datenbank 10 zu visualisieren.

Wie der Fig. 1 ferner entnommen werden kann, hat gemäß der dargestellten Ausführungsform lediglich der Hauptrechner 15 direkten Zugriff auf die Datenbank 10, die einzelnen Arbeitsrechner 20, 25 bzw. "Clients" müssen immer über den Hauptrechner 15 gehen. Dadurch wird verhindert, dass versehentlich falsche Daten in der Datenbank 10 gespeichert werden oder diese im schlimmsten Fall beschädigt wird. Auf diese Weise besteht auch die Möglichkeit, dass die von den einzelnen Arbeitsrechnern 20, 25 übermittelten Daten aufbereitet werden. So ist es z.B. möglich, dass der Hauptrechner 15 die übermittelten Daten daraufhin überprüft, ob bereits ähnliche Daten in der Datenbank 10 abgelegt sind, und falls ja, diese miteinander abgleicht. Anhand eines derartigen Datenabgleichs ist es möglich, die Integrität der bereitgestellten Daten zu verbessern. In diesem Zusammenhang ist es seitens des Hauptrechners 15 auch möglich, bestimmte Toleranzbereiche zu definieren, in deren Grenzen Werte als gleich eingestuft werden. Anhand eines derartigen Toleranzbereichs ist es möglich, die Vielzahl an gespeicherten Datensätzen zu reduzieren und gleichzeitig die Integrität zu steigern. Im Detail bedeutet dies, dass wenn z.B. zwei unterschiedliche Bediener zwei identische Bearbeitungen durchgeführt haben, mit fast identischen bearbeitungsspezifischen Parametern, und z.B. sich lediglich die Drehzahlen um 10% voneinander unterscheiden, die Datensätze als identisch beurteilt werden, und als nur ein Datensatz, gegebenenfalls als gemittelter Datensatz, gespeichert werden. Da in diesem Fall ein Datensatz von zwei unterschiedlichen Bedienern gespeichert wurde, kann eher davon ausgegangen werden, dass es sich um zuverlässige Daten handelt, womit die Integrität verbessert werden kann.

Andererseits, wenn ein Bediener vor dem Problem steht, dass er einen neuartigen Werkstoff, den er bisher noch nicht an seiner Bearbeitungsvorrichtung 30, 35 bearbeitet hat, bearbeiten muss, kann er bevor er erste Testläufe startet, in der Datenbank 10 nach Vorschlägen für optimale Einstellungswerte suchen. Wird der Bediener in der Datenbank 10 fündig, kann er die vorgeschlagenen Werte für einen ersten Testversuch verwenden und falls notwendig die Einstellungen weiter verfeinern bzw. verbessern. Daraufhin hat der Bediener die Möglichkeit, gegebenenfalls seine verbesserten Einstellungswerte bzw. bearbeitungsspezifischen Daten in der Datenbank 10 als Alternativvorschlag abzuspeichern. Sollte ein dritter Bediener mit einer ähnlichen Problemstellung konfrontiert werden, kann dieser auf zwei Vorschläge zurückgreifen und falls erfolgreich verwendet einen oder beide Vorschläge bewerten, was die Integrität der Vorschläge über die Zeit hin weitere verbessert.

Da gegebenenfalls den einzelnen Bedienern der Bearbeitungsvorrichtungen 30, 35 die Eingabe der jeweiligen bearbeitungsspezifischen Parameter in eine Maske zur Übermittlung der Daten an den Hauptrechner 15 zu aufwendig ist, besteht auch die Möglichkeit, die Daten automatisch an den Hauptrechner 15 zu übermitteln. In diesem Fall besteht ferner die Möglichkeit, dass der Arbeitsrechner 20, 25 der Bearbeitungsvorrichtung 30, 35 eine Vorauswahl trifft, um die von dem Hauptrechner 15 zu verwaltende Datenmenge zu reduzieren bzw. zu optimieren. Hier besteht beispielsweise die Möglichkeit, dass der Arbeitsrechner 20, 25 nur bearbeitungsspezifische Werte an den Hauptrechner 15 übermittelt, die reproduzierbar sind, d.h., bereits öfters ermittelt wurden. Da in solchen Fällen davon ausgegangen werden kann, dass es sich um keinen Test handelt, sondern um einen stabilen Fertigungsprozess. Hinsichtlich der Beurteilung der vorliegenden bearbeitungsspezifischen Daten kann auch auf Messwerte an der Bearbeitungsvorrichtung 30, 35, wie z.B. Vibrationen am Werkzeug und/oder an der Vorrichtung, Antriebsbelastung und dergleichen, zurückgegriffen werden. So kann z.B. von einer automatischen Übermittlung der Daten an den Hauptrechner 15 abgesehen werden, falls die Vibrationswerte an der Bearbeitungsvorrichtung 30, 35 über einem bestimmten Grenzwert liegen.

Weitere Ausführungsformen der vorliegenden Erfindung sind wie folgt definiert: E1 bis E22:
E1. Bearbeitungsvorrichtung (30, 35), insbesondere Holzbearbeitungsvorrichtung, zur Bearbeitung von bevorzugt zumindest abschnittsweise aus Holz, Holzwerkstoff, Kunststoff und/oder Glas bestehenden Werkstücken, umfassend:
   mindestens eine Funktionseinheit zur Ausführung einer Funktion in der Bearbeitungsvorrichtung, und
   eine Datenkommunikationsverbindung, die dazu konfiguriert ist, vorrichtungsbezogene Daten von einer externen Datenbank (10) zu empfangen, um
   diese für einen Bediener der Bearbeitungsvorrichtung (30, 35) verfügbar zu machen und/oder diese der mindestens einen Funktionseinheit bereitzustellen, wobei eine Ansteuerung oder Auswahl der mindestens einen Funktionseinheit auf den empfangenen vorrichtungsbezogenen Daten beruht.
E2. Bearbeitungsvorrichtung (30, 35) nach Ausführungsform 1, wobei die mindestens eine Funktionseinheit ein Prozessor ist und wobei der Prozessor die vorrichtungsbezogenen Daten zur Steuerung der Bearbeitungsvorrichtung (30, 35) verwendet.
E3. Bearbeitungsvorrichtung (30, 35) nach Ausführungsform 1, wobei die mindestens eine Funktionseinheit ein Werkzeug oder ein Bearbeitungsaggregat wie z.B. ein Sprühkopf, ein Beschichtungsaggregat, ein Heißluftaggregat usw. ist und wobei das Werkzeug oder das Bearbeitungsaggregat basierend auf den vorrichtungsbezogenen Daten ausgewählt bzw. angesteuert wird.
E4. Bearbeitungsvorrichtung (30, 35) nach einer der vorangehenden Ausführungsformen, wobei die Bearbeitungsvorrichtung (30, 35) konfiguriert ist, die vorrichtungsbezogenen Daten nach Werkzeugtyp, Werkzeugnummer, Werkstückparameter, Vorrichtungstyp, und/oder Hersteller bei der externen Datenbank (10) abzufragen.
E5. Bearbeitungsvorrichtung (30, 35) nach einer der vorangehenden Ausführungsformen, wobei die Datenkommunikationsverbindung ferner konfiguriert ist, an der Bearbeitungsvorrichtung (30, 35) gesammelte vorrichtungsbezogene Daten an die externe Datenbank (10) zu übertragen.
E6. Bearbeitungsvorrichtung (30, 35) nach einer der vorhergehenden Ausführungsformen, wobei mindestens eine Werkstückerfassungseinrichtung vorgesehen ist, anhand der bevorzugt zerstörungsfrei Werkstückparameter wie Elastizitätsmodul, Dichte, Dicke, Schichtdicke, usw. erfasst werden, anhand der zumindest eine Vorauswahl der von der externen Datenbank (10) zur Verfügung gestellten vorrichtungsbezogenen Daten erfolgt.
E7. Datenbankserver(40) zur Speicherung vorrichtungsbezogener Daten von Bearbeitungsvorrichtungen (30, 35) umfassend:
   eine Datenkommunikationsverbindung, die dazu konfiguriert ist, vorrichtungsbezogene Daten von mindestens einer Bearbeitungsvorrichtung (30, 35), insbesondere der Bearbeitungsvorrichtung nach einem der Ansprüche 1 bis 6, zu empfangen und gespeicherte vorrichtungsbezogene Daten für mindestens eine weitere Bearbeitungsvorrichtung (30, 35), insbesondere der Bearbeitungsvorrichtung nach einer der Ausführungsformen 1 bis 6, anhand einer Datenbank (10) verfügbar zu machen,
   mindestens einen Prozessor, der dazu konfiguriert ist, die empfangenen vorrichtungsbezogenen Daten aufzubereiten, und
   mindestens einen Speicher zum Speichern der aufbereiteten vorrichtungsbezogenen Daten.
E8. System (1) zum Teilen von vorrichtungsbezogenen Daten mittels Datenfernübertragung, insbesondere von bearbeitungsspezifischen Parametern, von Bearbeitungsvorrichtungen (30, 35), insbesondere Holzbearbeitungsvorrichtungen, zur Bearbeitung von bevorzugt zumindest abschnittsweise aus Holz, Holzwerkstoff, Kunststoff und/oder Glas bestehenden Werkstücken, umfassend:
   einen Hauptrechner (15), zur Erzeugung und Bereitstellung einer Datenbank (10), in der die vorrichtungsbezogenen Daten verwaltbar sind,
   einen ersten Arbeitsrechner (20) einer ersten Bearbeitungsvorrichtung (30), insbesondere der Bearbeitungsvorrichtung (30) nach einer der Ausführungsformen 1 bis 6, der mit dem Hauptrechner (15) über eine Datenkommunikationsverbindung verbindbar ist, und
   einen zweiten Arbeitsrechner (25) einer zweiten Bearbeitungsvorrichtung (35), insbesondere der Bearbeitungsvorrichtung (35) nach einer der Ausführungsformen 1 bis 6, der mit dem Hauptrechner (15) über eine Datenkommunikationsverbindung verbindbar ist,
   wobei durch mindestens einen der beiden Arbeitsrechner (20, 25) vorrichtungsbezogene Daten in der Datenbank (10) des Hauptrechners (15) speicherbar sind und dadurch für den anderen der beiden Arbeitsrechner (20, 25) verfügbar gemacht werden können.
E9. System (1) nach Ausführungsform 8, bei dem der Hauptrechner (15) ein Webserver ist, welcher eine World-Wide-Web-Adresse hat und eine Internet-Verbindbarkeit schafft, für die Übermittlung der vorrichtungsbezogenen Daten zwischen den Arbeitsrechnern (20, 25) und dem Webserver (15), wobei der Webserver insbesondere der Datenbankserver (40) nach Ausführungsform 7 ist.
E10. System (1) nach einer der Ausführungsformen 8 oder 9, wobei die bearbeitungsspezifischen Parameter mindestens einen der nachfolgenden Parameter umfasst: Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Materialmenge, Hilfsstoffe und dergleichen, Oberflächengüte, Qualität, Werkzeugstandzeit.
E11. System (1) nach einer der Ausführungsformen 8 bis 10, wobei die jeweiligen Arbeitsrechner (20, 25) gegenüber dem Hauptrechner (15) ein eindeutiges Identifizierungsmittel, insbesondere einen Identifizierungscode aufweisen, über das der Hauptrechner (15) vorrichtungsspezifische Daten, die dieser von den jeweiligen Arbeitsrechnern (20, 25) empfangene hat, diesen eindeutig zuordnen kann.
E12. System (1) nach einer der Ausführungsformen 8 bis 11, wobei die von einem der Arbeitsrechner (20, 25) in der Datenbank (10) gespeicherten vorrichtungsbezogenen Daten anonym für den anderen der beiden Arbeitsrechner (20, 25) verfügbar gemacht werden.
E13. System (1) nach einer der Ausführungsformen 8 bis 12, wobei die in der Datenbank (10) gespeicherten vorrichtungsbezogenen Daten nicht direkt für den anderen Arbeitsrechner 20, 25 verfügbar gemacht werden, sondern in Form von Durchschnittswerten bzw. interpolierten Werten zur Verfügung gestellt werden.
E14. System (1) nach einer der Ausführungsformen 8 bis 13, wobei die jeweiligen Arbeitsrechner (20, 25) die vorrichtungsspezifischen Daten automatisch und/oder auf Anweisung seitens eines Bedieners der entsprechenden Bearbeitungsvorrichtung (30, 35) an den Hauptrechner (15) übermitteln.
E15. System (1) nach einer der Ausführungsformen 8 bis 14, wobei der Arbeitsrechner (20, 25) basierend auf Vorrichtungsmesswerten, wie z.B. Antriebsbelastung, Vibrationen am Werkzeug und/oder an der Vorrichtung, Vorschubgeschwindigkeit und dergleichen, die seitens der Bearbeitungsvorrichtung (30, 35) erfasst werden, ermittelt, ob es sich bei der vorgenommenen Werkstückbearbeitung um eine stabile Bearbeitung handelt oder nicht, und entsprechend die erfassten bearbeitungsspezifischen Parameter an den Hauptrechner (15) übermittelt oder nicht.
E16. System (1) nach einer der Ausführungsformen 8 bis 15, wobei die seitens des Hauptrechners (15) bereitgestellte Datenbank (10) anhand der nachfolgenden Kategorien durchsuchbar ist: Werkzeugtyp; Werkzeugnummer; Produktdaten wie z.B. Material, Abmessungen des Werkstücks, Festigkeit; Vorrichtungstyp; Hersteller und dergleichen.
E17. System (1) nach einer der Ausführungsformen 8 bis 16, wobei in der Datenbank (10) gespeicherte Datensätze hinsichtlich ihrer Integrität beurteilbar sind.
E18. System (1) nach einer der Ausführungsformen 8 bis 17, wobei in der Datenbank (15) Datensätze miteinander verknüpft werden können, um dadurch unterschiedliche Alternativvorschläge abspeichern zu können.
E19. System (1) nach einer der Ausführungsformen 8 bis 18, wobei eine automatische Übermittlung der vorrichtungsbezogenen Daten, insbesondere der bearbeitungsspezifischen Parameter, an den Hauptrechner (15) nur dann erfolgt, wenn Vibrationswerte an der Bearbeitungsvorrichtung (30, 35) unterhalb eines voreingestellten Grenzwerts liegen.
E20. Verfahren zum Teilen von vorrichtungsbezogenen Daten mittels Datenfernübertragung, insbesondere von bearbeitungsspezifischen Parametern, von Bearbeitungsvorrichtungen (30, 35), insbesondere Holzbearbeitungsvorrichtungen, zur Bearbeitung von bevorzugt zumindest abschnittsweise aus Holz, Holzwerkstoff, Kunststoff und/oder Glas bestehenden Werkstücken, insbesondere mittels des Systems (1) nach einer der Ausführungsformen 8 bis 19, wobei das Verfahren umfasst:
   - Erzeugen einer Datenbank (10), in der die vorrichtungsbezogenen Daten verwaltbar sind,
   - Speichern von vorrichtungsbezogenen Daten einer ersten Bearbeitungsvorrichtung (30) in der Datenbank (10), insbesondere der Bearbeitungsvorrichtung (30) nach einer der Ausführungsformen 1 bis 6, und
   - Verfügbarmachen der seitens der ersten Bearbeitungsvorrichtung (30) in der Datenbank (10) gespeicherten vorrichtungsbezogenen Daten für zumindest eine weitere Bearbeitungsvorrichtung (35), insbesondere der Bearbeitungsvorrichtung (35) nach einer der Ausführungsformen 1 bis 6.
E21. Verfahren nach Ausführungsformen 20, bei dem eine Übermittlung der vorrichtungsspezifischen Daten zwischen einem Webserver (15) und mindestens zwei Bearbeitungsvorrichtungen (30, 35) über eine Datenfernübertragung (webbasiert) erfolgt.
E22. Verwendung eines Systems (1) zum Teilen von vorrichtungsbezogenen Daten mittels Datenfernübertragung gemäß einer der Ausführungsformen 8 bis 19, um einem Bediener einer ersten Bearbeitungsvorrichtung (30), insbesondere der Bearbeitungsvorrichtung (30) nach einer der Ausführungsformen 1 bis 6, bearbeitungsspezifische Parameter einer zweiten Bearbeitungsvorrichtung (35), insbesondere der Bearbeitungsvorrichtung (35) nach einer der Ausführungsformen 1 bis 6,verfügbar zu machen.

## Patentansprüche

1. System (1) zum Teilen von vorrichtungsbezogenen Daten mittels Datenfernübertragung von Holzbearbeitungsvorrichtungen (30, 35) zur Bearbeitung von bevorzugt zumindest abschnittsweise aus Holz, Holzwerkstoff, Kunststoff und/oder Glas bestehenden Werkstücken, umfassend:
einen Hauptrechner (15), zur Erzeugung und Bereitstellung einer Datenbank (10), in der die vorrichtungsbezogenen Daten, welche optimierte bearbeitungsspezifische Parameter sind, mit denen eine Verbesserung der Bearbeitungsqualität oder ein optimales Bearbeitungsergebnis erzielbar ist, verwaltbar sind,
einen ersten Arbeitsrechner (20) einer ersten Bearbeitungsvorrichtung (30) der mit dem Hauptrechner (15) über eine Datenkommunikationsverbindung verbindbar ist, und
einen zweiten Arbeitsrechner (25) einer zweiten Bearbeitungsvorrichtung (35) der mit dem Hauptrechner (15) über eine Datenkommunikationsverbindung verbindbar ist,
wobei durch mindestens einen der beiden Arbeitsrechner (20, 25) vorrichtungsbezogene Daten in der Datenbank (10) des Hauptrechners (15) speicherbar sind und dadurch für den anderen der beiden Arbeitsrechner (20, 25) verfügbar gemacht werden können,
wobei die bearbeitungsspezifischen Parameter mindestens einen der nachfolgenden Parameter umfassen: Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Materialmenge, Hilfsstoffe und dergleichen, Oberflächengüte, Qualität, Werkzeugstandzeit,
wobei der Hauptrechner (15) dazu eingerichtet ist, die von zumindest einem der beiden Arbeitsrechner (20, 25) übermittelten vorrichtungsbezogenen Daten dahingehend zu prüfen, ob bereits ähnliche Daten in der Datenbank (10) abgelegt sind, und wenn ja, diese miteinander abgleicht.

2. System (1) nach Anspruch 1, wobei das System (1) dazu eingerichtet ist, beim Abgleich der Daten in der Datenbank (10) Daten, die innerhalb eines vorbestimmten Toleranzbereichs liegen, insbesondere in einem Toleranzbereich von 10% liegen, als identisch zu beurteilt und als nur einen Datensatz abzuspeichern.

3. System (1) nach Anspruch 1 oder 2, wobei die Datenbank (10) dazu eingerichtet ist, es einem Bediener nach Verwendung von in der Datenbank (10) abgespeicherten Daten, insbesondere bearbeitungsspezifischen Parametern, zu ermöglichen, weiter verfeinerte oder verbesserte Daten, insbesondere bearbeitungsspezifische Parameter, als Alternativvorschlag abzuspeichern und/oder die verwendeten Daten hinsichtlich ihrer Qualität, insbesondere dem damit erzielbaren Ergebnis, zu beurteilen und die Beurteilung abzuspeichern.

4. System (1) nach Anspruch 3, wobei die Datenbank (10) dazu eingerichtet ist, es einem Bediener nach Verwendung von in der Datenbank (10) abgespeicherten Daten, insbesondere bearbeitungsspezifischen Parametern, sowie des dazugehörigen Alternativvorschlags, zu ermöglichen, die beiden Datensätze hinsichtlich ihrer Integrität zu beurteilen.

5. System (1) nach einem der vorhergehenden Ansprüche, wobei die Arbeitsrechner (20, 25) dazu eingerichtet sind, zu ermitteln, ob es sich bei der zuletzt durchgeführten Bearbeitung um eine Bearbeitung handelt, die zu einem guten Ergebnis führt, und wenn ja, der Arbeitsrechner (20, 25) in der Datenbank (10) recherchiert, ob es für den verwendeten Datensatz, insbesondere die verwendeten bearbeitungsspezifischen Daten, bereits einen Datensatz in der Datenbank (10) gibt, und nur dann, wenn noch kein Datensatz vorhanden ist, den Bediener auffordert die Daten an den Hauptrechner zu übermitteln.

6. System (1) nach einem der vorhergehenden Ansprüche, wobei die erste und/oder die zweite Bearbeitungsvorrichtung (30, 35) eine Holzbearbeitungs-vorrichtung zur Bearbeitung von zumindest abschnittsweise aus Holz, Holzwerkstoff, Kunststoff und/oder Glas bestehenden
Werkstücken ist, umfassend:
mindestens eine Funktionseinheit zur Ausführung einer Funktion in der Bearbeitungsvorrichtung, und
eine Datenkommunikationsverbindung, die dazu konfiguriert ist, die vorrichtungsbezogenen Daten von der externen Datenbank (10) zu empfangen, um diese für einen Bediener der Bearbeitungsvorrichtung (30, 35) verfügbar zu machen und/oder diese der mindestens einen Funktionseinheit bereitzustellen, wobei eine Ansteuerung oder Auswahl der mindestens einen Funktionseinheit auf den empfangenen vorrichtungsbezogenen Daten beruht.

7. System nach einem der vorhergehenden Ansprüche, wobei die erste und/oder die zweite Bearbeitungsvorrichtung (30) mit mindestens einer Werkstückerfassungseinrichtung versehen ist, anhand der bevorzugt zerstörungsfrei Werkstückparameter wie Elastizitätsmodul, Dichte, Dicke, Schichtdicke, usw. erfasst werden, anhand der zumindest eine Vorauswahl der von der externen Datenbank (10) zur Verfügung gestellten vorrichtungsbezogenen Daten erfolgt.

8. System (1) nach einem der vorhergehenden Ansprüche, bei dem der Hauptrechner (15) ein Webserver ist, welcher eine World-Wide-Web-Adresse hat und eine Internet-Verbindbarkeit schafft, für die Übermittlung der vorrichtungsbezogenen Daten zwischen den Arbeitsrechnern (20, 25) und dem Webserver (15).

9. System (1) nach einem der vorhergehenden Ansprüche, wobei die jeweiligen Arbeitsrechner (20, 25) gegenüber dem Hauptrechner (15) ein eindeutiges Identifizierungsmittel, insbesondere einen Identifizierungscode aufweisen, über das der Hauptrechner (15) vorrichtungsspezifische Daten, die dieser von den jeweiligen Arbeitsrechnern (20, 25) empfangene hat, diesen eindeutig zuordnen kann.

10. System (1) nach einem der vorhergehenden Ansprüche, wobei die in der Datenbank (10) gespeicherten vorrichtungsbezogenen Daten nicht direkt für den anderen Arbeitsrechner 20, 25 verfügbar gemacht werden, sondern in Form von Durchschnittswerten oder interpolierten Werten zur Verfügung gestellt werden.

11. System (1) nach einem der vorhergehenden Ansprüche, wobei die jeweiligen Arbeitsrechner (20, 25) die vorrichtungsspezifischen Daten automatisch und/oder auf Anweisung seitens eines Bedieners der entsprechenden Bearbeitungsvorrichtung (30, 35) an den Hauptrechner (15) übermitteln.

12. System (1) nach einem der vorhergehenden Ansprüche, wobei der Arbeitsrechner (20, 25) basierend auf Vorrichtungsmesswerten, wie z.B. Antriebsbelastung, Vibrationen am Werkzeug und/oder an der Vorrichtung, Vorschubgeschwindigkeit und dergleichen, die seitens der Bearbeitungsvorrichtung (30, 35) erfasst werden, ermittelt, ob es sich bei der vorgenommenen Werkstückbearbeitung um eine stabile Bearbeitung handelt oder nicht, und entsprechend die erfassten bearbeitungsspezifischen Parameter an den Hauptrechner (15) übermittelt oder nicht.

13. System (1) nach einem der vorhergehenden Ansprüche, wobei in der Datenbank (10) gespeicherte Datensätze hinsichtlich ihrer Integrität beurteilbar sind, und/oder in der Datenbank (15) Datensätze miteinander verknüpft werden können, um dadurch unterschiedliche Alternativvorschläge abspeichern zu können.

14. System (1) nach einem der vorhergehenden Ansprüche, wobei eine automatische Übermittlung der vorrichtungsbezogenen Daten, insbesondere der bearbeitungsspezifischen Parameter, an den Hauptrechner (15) nur dann erfolgt, wenn Vibrationswerte an der Bearbeitungsvorrichtung (30, 35) unterhalb eines voreingestellten Grenzwerts liegen.

15. Verfahren zum Teilen von vorrichtungsbezogenen Daten mittels Datenfernübertragung von Holzbearbeitungsvorrichtungen (30, 35) zur Bearbeitung von bevorzugt zumindest abschnittsweise aus Holz, Holzwerkstoff, Kunststoff und/oder Glas bestehenden Werkstücken, insbesondere mittels des Systems (1) nach einem der vorhergehenden Ansprüche, wobei das Verfahren umfasst:
- Erzeugen einer Datenbank (10), in der die vorrichtungsbezogenen Daten, welche optimierte bearbeitungsspezifische Parameter sind, mit denen eine Verbesserung der Bearbeitungsqualität oder ein optimales Bearbeitungsergebnis erzielbar ist, verwaltbar sind,
- Speichern von vorrichtungsbezogenen Daten einer ersten Bearbeitungsvorrichtung (30) in der Datenbank (10), und
- Verfügbarmachen der seitens der ersten Bearbeitungsvorrichtung (30) in der Datenbank (10) gespeicherten vorrichtungsbezogenen Daten für zumindest eine weitere Bearbeitungsvorrichtung (35),
wobei die bearbeitungsspezifischen Parameter mindestens einen der nachfolgenden Parameter umfassen: Werkstückart, zu verarbeitender Werkstoff, Werkzeugtyp, Werkzeugmaterial, Verfahrensparameter wie z.B. Vorschub, Drehzahl, Schnittgeschwindigkeit, Schnittkraft, Temperatur, Materialmenge, Hilfsstoffe und dergleichen, Oberflächengüte, Qualität, Werkzeugstandzeit, und
wobei der Hauptrechner (15) dazu eingerichtet ist, die von der ersten Bearbeitungsvorrichtung (30) übermittelten vorrichtungsbezogenen Daten dahingehend zu prüfen, ob bereits ähnliche Daten in der Datenbank (10) abgelegt sind, und wenn ja, diese miteinander abgleicht.
